# EUROPEAN PATENT APPLICATION

(11) **EP 4 345 176 A1**
(43) Date of publication of application: **03.04.2024**
(21) Application number: 23198107.7
(22) Date of filing: 19.09.2023
(51) Int. Cl.: C21C 5/46, C21C 5/52, C21C 7/10

(54) **PROGRAM, INFORMATION PROCESSING DEVICE, INFORMATION PROCESSING METHOD, METHOD OF GENERATING LEARNING MODEL, AND MOLTEN STEEL TREATMENT METHOD**

(30) Priority: 28.09.2022 JP 2022155187
(71) Applicant: Japan Steel Works M&E, Inc., Hokkaido 051-8505 (JP)
(72) Inventor: SOWA, Takashi, Muroran-shi Hokkaido 051-8505 (JP); SUZUKI, Tadashi, Muroran-shi Hokkaido 051-8505 (JP); SEKI, Yuta, Muroran-shi Hokkaido 051-8505 (JP)
(74) Representative: Cabinet Beaumont

(57) **Abstract**

A program causes a computer to execute processes of acquiring image data of slag floating on molten steel, and outputting oxygen content information by inputting the acquired image data to a learning model configured to output oxygen content information related to oxygen content in molten steel when image data of slag is input. Preferably, the image data is in an HSV format, and the program causes the computer to execute processes of acquiring image data in an HSV format, and inputting the acquired image data in the HSV format to the learning model.

## Description

### FIELD

The present invention relates to a program, an information processing device, an information processing method, a method of generating a learning model, and a molten steel treatment method.

### BACKGROUND

Technology for supporting operations performed in steel mills has been disclosed. For example, image processing technology for evaluating soundness of a tuyere installed at a bottom of a bottom blowing converter has been described (see Japanese Patent Laid-Open Publication No. 2017-179598).

### SUMMARY

However, the technology disclosed in Japanese Patent Laid-Open Publication No. 2017-179598 only evaluates soundness of a tuyere, and the estimation of oxygen content in molten steel has not been achieved.

An object of one aspect is to provide a program, etc. for estimating oxygen content in molten steel.

A program according to the one aspect causes a computer to execute processes of sampling slag floating on molten steel, acquiring image data thereof, and outputting oxygen content information by inputting the acquired image data to a learning model configured to output oxygen content information related to oxygen content in molten steel when image data of slag is input.

In the one aspect, it is possible to provide a program, etc. for estimating oxygen content in molten steel.

### BRIEF DESCRIPTION OF THE DRAWINGS

FIG. 1 is a schematic diagram illustrating a process of molten steel treatment;
FIG. 2 is a schematic diagram illustrating a configuration example of an oxygen content estimation system;
FIG. 3 is a block diagram illustrating a configuration example of an information processing device;
FIG. 4 is a block diagram illustrating a configuration example of an imaging device;
FIG. 5 is an explanatory diagram illustrating data layout of a slag DB;
FIG. 6 is an explanatory diagram illustrating data layout of a training data DB;
FIG. 7 is a schematic diagram illustrating a configuration example of a learning model;
FIG. 8 is a flowchart illustrating a procedure of generating a learning model;
FIG. 9 is an example of a result screen displayed by the information processing device;
FIG. 10 is a flowchart illustrating a procedure of processing a program executed by the information processing device;
FIG. 11 is a flowchart illustrating a procedure of processing a program executed by the information processing device; and
FIG. 12 is a flowchart illustrating a molten steel treatment method.

### DETAILED DESCRIPTION OF NON-LIMITING EXAMPLE EMBODIMENTS

In this embodiment, a description will be given of an oxygen content estimation system for estimating oxygen content in molten steel from slag floating on molten steel.

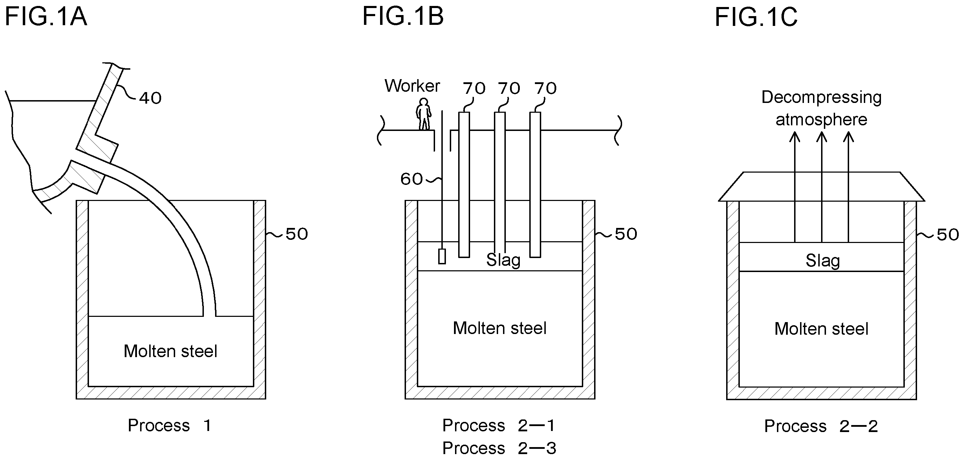

FIG. 1 is a schematic diagram illustrating a process of molten steel treatment.

A ladle 50 is a container into which hot molten steel is poured. Slag floats on the molten steel in the ladle 50. Ajig and a method for collecting samples of molten steel and slag are not particularly limited. However, for example, a tip of a sampling rod 60 has a dipper shape. When collecting a sample of molten steel, the sampling rod 60 puts the molten steel in a dipper portion and scoop the molten steel, and when collecting a sample of slag, the sampling rod 60 collects the sample by attaching the slag to a surface of the sampling rod 60. The ladle 50 is equipped with a three-phase electrode 70 that moves up and down. The three-phase electrode 70 heats the molten steel using electrical energy from the arc.

Molten steel produced by melting iron scrap in an electric furnace 40 is transferred to the ladle 50 after dephosphorization by oxidizing refining (process 1 of FIG. 1A). Thereafter, the molten steel in the ladle 50 is subjected to reduction refining (process 2-1 of FIG. 1B), vacuum treatment (process 2-2 of FIG. 1C), and composition adjustment (process 2-3 of FIG. 1B), and then proceeds to a casting process.

FIG. 1A is a schematic diagram illustrating oxidizing refining of process 1. In the electric furnace 40, steel scrap, which is a main raw material, is heated and melted using electric energy, and then oxygen is blown into the molten steel to oxidize and remove unnecessary components from the steel. This process is referred to as oxidizing refining, and slag generated during oxidizing refining is referred to as "oxidized slag".

FIG. 1B is a schematic diagram illustrating reduction refining of process 2-1 or composition adjustment of process 2-3. After oxidizing refining, in the ladle 50, oxygen and sulfur in the molten steel are removed. This process is referred to as reduction refining, and slag generated during reduction refining is referred to as "reduced slag". In this specification, for convenience, the term "reduced slag" is simply referred to as "slag".

Before and after the vacuum treatment (process 2-1 and process 2-3), a worker samples slag floating on the molten steel using the sampling rod 60. The case where the slag is sampled before the vacuum treatment is referred to as a first time point, and the case where the slag is sampled after the vacuum treatment is referred to as a second time point.

FIG. 1C is a schematic diagram illustrating vacuum treatment of process 2-2. After reducing oxygen content in the molten steel to a certain extent by reduction refining, the process proceeds to the vacuum treatment to decompress the atmosphere in order to further reduce the oxygen content in the molten steel. After finishing the vacuum treatment, composition adjustment is performed to adjust a chemical composition in the molten steel to a target range. Next, a casting process of pouring the molten steel into a predetermined container to produce a steel ingot is performed.

In order to produce a high-quality steel product, proper control of oxygen content in molten steel is required in the above-described steelmaking process. In response to this request, a worker in a steel mill samples slag floating on molten steel, and estimates oxygen content in the molten steel by visually observing a color of the slag. Slag undergoes various chemical reactions in each process, and shows a color based on a chemical composition of various oxides. The worker estimates the oxygen content in the molten steel by capturing color change of the slag.

At present, a skilled worker visually inspects the slag to estimate the oxygen content in the molten steel and manage the steelmaking process. However, there is variation in human judgment, and it is difficult to keep the quality of steel products constant.

Therefore, by this system using machine learning, the oxygen content in the molten steel is accurately estimated to support determination of the worker. In this way, it is possible to manufacture a high-quality steel product regardless of a skill level of the worker. Furthermore, as this system improves work efficiency, it is possible to reduce the amount of electricity used in the steelmaking process and to reduce wear and tear of refractories (the ladle 50, etc.) that hold the molten steel.

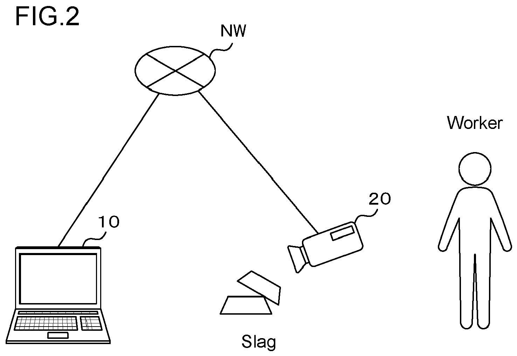

FIG. 2 is a schematic diagram illustrating a configuration example of an oxygen content estimation system. The system includes an information processing device 10 and an imaging device 20 operated and managed by a worker. The information processing device 10 and the imaging device 20 are communicably connected via a communication network NW.

The information processing device 10 is an information device such as a personal computer, a server computer, or a smartphone that provides this system. In the present embodiment, one computer performs the processing. However, a plurality of computers may perform the processing in a distributed manner. In addition, a part of the processing executed by the information processing device 10 may be executed by a server computer on a cloud.

The imaging device 20 is a camera that captures slag sampled by the worker. The imaging device 20 transmits captured image data of slag (hereinafter referred to as slag image) to the information processing device 10. Note that the slag image may be acquired using a camera built into the information processing device 10.

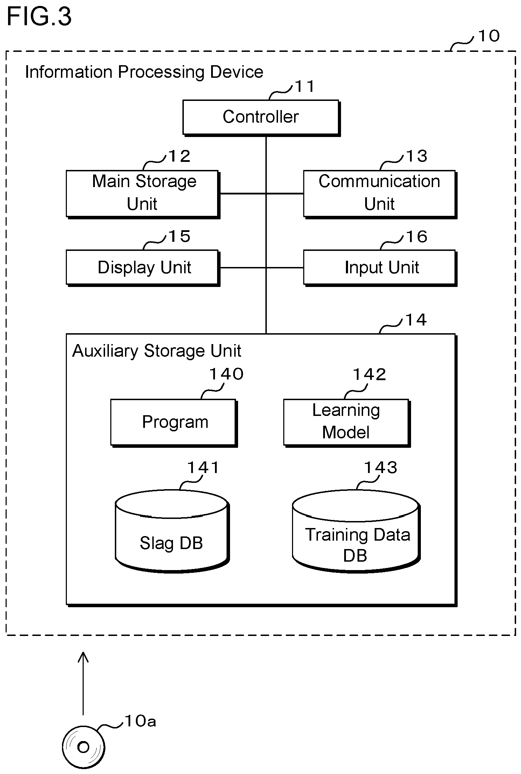

FIG. 3 is a block diagram illustrating a configuration example of the information processing device 10. The information processing device 10 includes a controller 11, a main storage unit 12, a communication unit 13, an auxiliary storage unit 14, a display unit 15, and an input unit 16.

The controller 11 is one or a plurality of CPUs (Central Processing Units), MPUs (Micro-Processing Units), or GPUs (Graphics Processing Units), or a processor such as a quantum processor, and executes various types of information processing.

The main storage unit 12 is a temporary storage area such as an SRAM (Static Random Access Memory) or a DRAM (Dynamic Random Access Memory), and temporarily stores data necessary for the controller 11 to execute processing.

The communication unit 13 is a communication interface for connecting to the communication network NW such as the Internet or a LAN (Local Area Network).

The auxiliary storage unit 14 is a memory such as an SSD (Solid State Drive) or an HDD (Hard Disk Drive). The auxiliary storage unit 14 stores a program (program product) 140 that causes the information processing device 10 to execute the processing, a slag DB (data base) 141, a learning model 142, a training data DB 143, and other data.

The auxiliary storage unit 14 stores the learning model 142 for estimating oxygen content in molten steel. The auxiliary storage unit 14 stores data including configuration information of a neural network, coefficients and threshold values of each neuron, etc. for the learning model 142. In the present embodiment, the case where the information processing device 10 trains the learning model 142 will be described. However, another computer may train the learning model 142. Thereafter, the learning model 142 is deployed to the information processing device 10.

Note that the present embodiment illustrates an example in which inference is performed using the learning model 142 in the information processing device 10. However, the invention is not limited thereto. A mode may be adopted in which the learning model 142 is stored in a server computer (not illustrated), a slag image is transmitted from the information processing device 10 to the server computer, and the server computer transmits an inference result of the learning model 142 to the information processing device 10.

The training data DB 143 stores training data used for generation processing of the learning model 142. The training data is, for example, data in which input information and output information of the learning model 142 are associated with each other. In the present embodiment, the input information is image data of slag in molten steel, and the output information is oxygen content information on oxygen content in molten steel. Hereinafter, "image data of slag floating on molten steel" is simply referred to as "slag image", and "oxygen content information on oxygen content in molten steel" is referred to as "oxygen content information". Further, the oxygen content information output by the learning model 142 includes first oxygen content information and second oxygen content information, which will be described later.

Note that the information processing device 10 may include a reader for reading a portable storage medium 10a, and read a program 140 from the portable storage medium 10a. In addition, the information processing device 10 may download the program 140 from another computer via the communication network NW.

The display unit 15 is a display screen such as a liquid crystal display or an organic EL (Electro Luminescence) display, and displays an image. The display unit 15 displays, for example, a result screen output by the learning model 142, which will be described later.

The input unit 16 is an input interface such as a touch panel or mechanical operation buttons, and receives operation input from an inspector. The input unit 16 may be a microphone that collects a voice command of the worker.

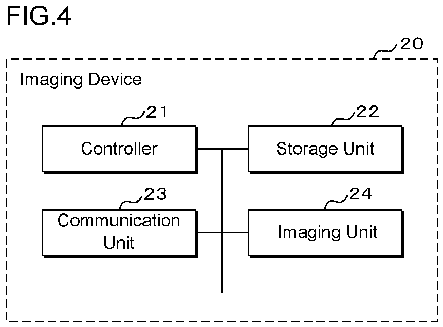

FIG. 4 is a block diagram illustrating a configuration example of the imaging device 20. The imaging device 20 includes a controller 21, a storage unit 22, a communication unit 23, and an imaging unit 24.

The controller 21 is one or more CPUs, MPUs, or GPUs, or a processor such as a quantum processor, and executes various types of information processing.

The storage unit 22 is a temporary storage area such as an SRAM or a DRAM, and temporarily stores data necessary for the controller 21 to execute a processing.

The communication unit 23 is a communication interface for connecting to the communication network NW such as the Internet or a LAN.

The imaging unit 24 is a camera having an imaging element such as a CCD (Charge-Coupled Device) sensor or a CMOS (Complementary Metal Oxide Semiconductor) sensor, and captures an image.

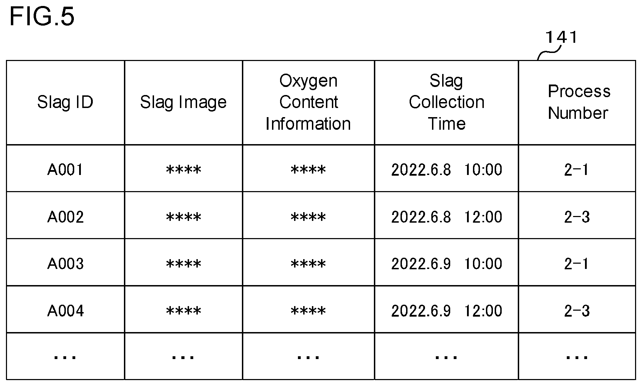

FIG. 5 is an explanatory diagram illustrating data layout of the slag DB 141. The slag DB 141 is a DB that stores fields of slag ID (identifier), slag image, oxygen content information, slag collection time, and process number.

Identification information for identifying slag (hereinafter referred to as slag ID) is stored in the slag ID field. A slag image acquired by the imaging device 20 is stored in an HSV format in the slag image field. HSV is preferable for a storage format of the slag image in terms of increasing accuracy of estimating the oxygen content. However, a format such as RGB, CMY, CMYK, HSL, or YUV may be used. In addition, the slag image may be an image captured by a black-and-white camera or infrared camera.

Oxygen content information output by the learning model is stored in the oxygen content information field. For example, the oxygen content information is information on oxygen content in molten steel such as oxygen content in molten steel or an oxygen level in molten steel. A time when the corresponding slag is sampled is stored in the slag collection time field. A process number (for example, process 2-1 or process 2-3) when the slag is sampled is stored in the process number field.

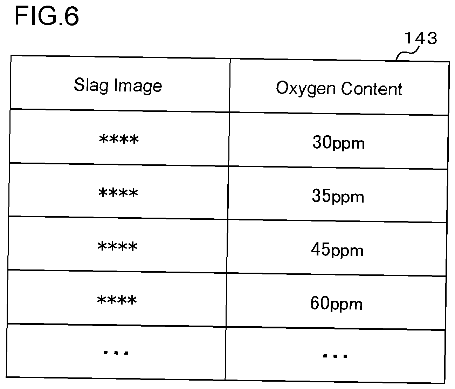

FIG. 6 is an explanatory diagram illustrating data layout of the training data DB 143. The training data DB 143 associates a slag image and oxygen content and stores them.

A slag image acquired by the imaging device 20 is stored in an HSV format in a slag image field. A storage format of the slag image may be an RGB format. However, an HSV format is preferable in terms of increasing accuracy of estimating oxygen content. A reason therefor is that, even when a slag image of an RGB format is input to the learning model 142, color change of slag occurs around a G-value, resulting in insufficient estimation accuracy. In the present embodiment, "slag image" is assumed to be in the HSV format. Oxygen content in molten steel measured by a method (G1239:2014) specified in JIS (Japanese Industrial Standards) is stored in an oxygen content field.

The details of this system will be described below.

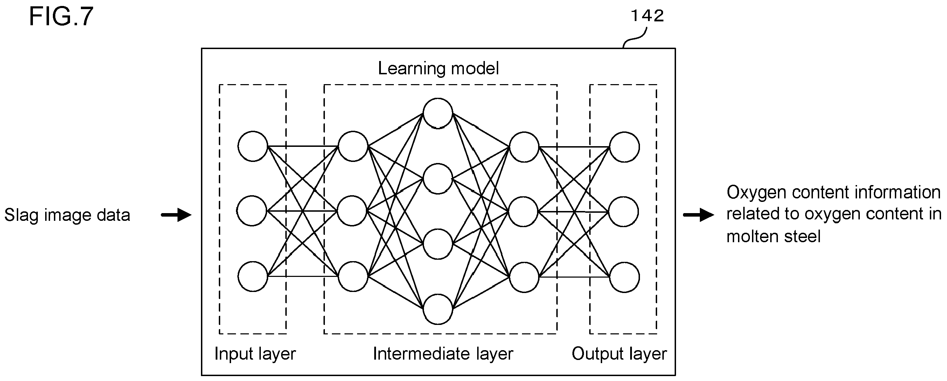

FIG. 7 is a schematic diagram illustrating a configuration example of the learning model 142.

The information processing device 10 generates the learning model 142 using a plurality of training data sets stored in the training data DB 143. The learning model 142 includes, for example, a CNN (Convolutional Neural Network), a DNN (Deep Neural Network), or an RNN (Recurrent Neural Network), which is a neural network model generated by deep learning. Specifically, the learning model 142 has a structure in which a plurality of neurons is interconnected. A neuron is an element that performs calculation on a plurality of inputs and outputs one value as a calculation result. A neuron has information such as weighting coefficients and threshold values used in calculation.

The learning model 142 includes an input layer that accepts input of one or more pieces of data, an intermediate layer that performs calculation processing on data received by the input layer, and an output layer that aggregates calculation results of the intermediate layer and outputs one or more values. As illustrated in FIG. 7, in the present embodiment, a slag image is input, and oxygen content information related to oxygen content is output.

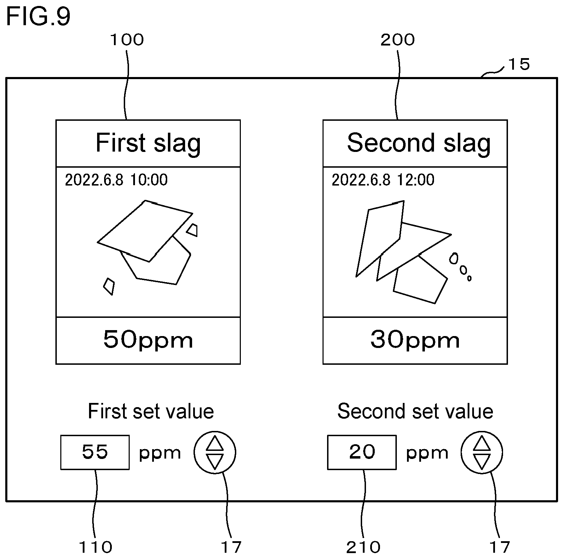

In the present embodiment, as described in detail in FIG. 9, the learning model 142 outputs a predetermined numerical value (for example, 50 ppm). In addition, when the learning model 142 outputs oxygen content information, the oxygen content information may be output by classifying oxygen content from level 1 to level 5, or the oxygen content information may be output as a binary value indicating whether it is higher or lower than predetermined oxygen content.

The information processing device 10 inputs the slag image to the learning model 142 and acquires oxygen content information as output data. The information processing device 10 compares oxygen content information on oxygen content output from the learning model 142 with oxygen content in molten steel measured using a method specified in JIS. The information processing device 10 updates weights between neurons using, for example, an error backpropagation method so that there is no difference between the oxygen content information on the oxygen content output and a measurement value of the oxygen content according to JIS. And the information processing device 10 generates the final learning model 142 that estimates the oxygen content in the molten steel.

Note that, in addition to the neural network, the learning model 142 may be configured using an algorithm such as transformer, U-Net, autoencoder, decision trees, random forest, gradient boosting, or SVM (Support Vector Machine), and may be configured by combining a plurality of algorithms.

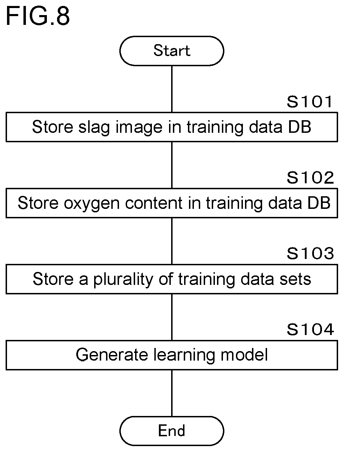

FIG. 8 is a flowchart illustrating a procedure of generating the learning model 142. The controller 11 of the information processing device 10 executes the following processing based on the program 140.

The worker samples slag. The worker captures slag using the imaging device 20. The controller 11 acquires the slag image captured by the imaging device 20 and stores the slag image in the training data DB 143 (step S101).

The worker measures oxygen content in molten steel according to a method specified by JIS. The worker inputs the measured oxygen content through the input unit 16 of the information processing device 10. The controller 11 associates the received oxygen content with the slag image and stores them in the training data DB 143 (step S102). In steps S101 and S102, the slag image is input data, and the oxygen content is output data.

The controller 11 performs similar processing for a plurality of slag samples, and stores a plurality of training data sets in the training data DB 143 (step S103). The controller 11 uses the training data sets to generate the learning model 142 (step S104). The controller 11 ends a series of processing.

Next, a description will be given of the case where the worker uses this system to perform molten steel treatment.

In process 2-1 and process 2-3 illustrated in FIG. 1B, the worker samples slag and captures the slag using the imaging device 20. The imaging device 20 transmits the captured slag image to the information processing device 10. The information processing device 10 receives the transmitted slag image. The information processing device 10 inputs the slag image to the learning model 142 to acquire oxygen content information. The information processing device 10 associates the acquired oxygen content information with the slag image and stores them in the slag DB 141.

Further, the worker inputs a collection time and a process number of the sampled slag through the input unit 16 of the information processing device 10. The information processing device 10 stores the slag image, the oxygen content information, the collection time, and the process number in the slag DB 141 in association with each other.

As described with reference to FIG. 1B, the case where the slag is sampled before the vacuum treatment is referred to as the first time point, and the case where the slag is sampled after the vacuum treatment is referred to as the second time point. The first oxygen content information (first oxygen content) is acquired by sampling first slag at the first time point and inputting first image data of the first slag (hereinafter referred to as a first slag image) to the learning model 142. Similarly, the second oxygen content information (second oxygen content) is acquired by sampling second slag at the second time point and inputting second image data of the second slag (hereinafter referred to as a second slag image) to the learning model 142.

In the present embodiment, the case of inputting one slag image obtained by single sampling will be described. However, an average slag image obtained from multiple sampling may be input. In this case, the average slag image is input to the learning model 142 after performing preprocessing to obtain an average HSV value of a plurality of slag images.

FIG. 9 is an example of a result screen displayed by the information processing device 10. As illustrated in FIG. 9, the display unit 15 of the information processing device 10 may show a comparative display of the first oxygen content and the second oxygen content. In addition, instead of showing the comparative display of the first oxygen content and the second oxygen content, the information processing device 10 may individually display each oxygen content.

An example in which the information processing device 10 compares and displays the first oxygen content and the second oxygen content will be described below.

While checking the result screen during operation, the worker uses the first oxygen content as a criterion for determining whether or not to proceed to the vacuum treatment, and uses the second oxygen content as a criterion for determining whether or not to proceed to the casting process. The worker proceeds to the vacuum treatment when the first oxygen content and other conditions satisfy predetermined conditions, and proceeds to the casting process when the second oxygen content and other conditions satisfy predetermined conditions.

Hereinafter, each "predetermined condition" will be described as "when the oxygen content in the molten steel is equal to or less than a predetermined value". However, the invention is not limited thereto. Alternatively, the "predetermined condition" may be "when the oxygen content in the molten steel is at a predetermined level".

In the case of determining whether or not it is appropriate to start the vacuum treatment with regard to the oxygen content in the molten steel, the worker proceeds to the vacuum treatment when the first oxygen content is equal to or less than a predetermined numerical value, and does not proceed to the vacuum treatment when the first oxygen content is greater than the predetermined numerical value. In the case of not proceeding to the vacuum treatment, the worker performs reduction refining to lower the oxygen content in the molten steel. Thereafter, the information processing device 10 inputs a first slag image obtained by resampling to the learning model 142 to acquire first oxygen content.

After the vacuum treatment, in the case of determining whether or not it is appropriate to proceed to the casting process, the worker proceeds to the casting process when the second oxygen content is equal to or less than a predetermined numerical value, and executes the vacuum treatment again when the second oxygen content is greater than the predetermined numerical value. When the vacuum treatment is executed again, the information processing device 10 inputs a second slag image obtained by resampling to the learning model 142 to acquire second oxygen content.

The predetermined numerical value (in units of ppm) of the above process can be set and changed by the worker. Specifically, the worker inputs each predetermined numerical value through an input button 17 at the bottom of the result screen. The information processing device 10 receives input of a set value of the first oxygen content (hereinafter referred to as first set value) and a set value of the second oxygen content (hereinafter referred to as second set value), and stores the set values as the first set value and the second set value. The information processing device 10 displays each set value in each of a setting window 110 of the first oxygen content and a setting window 210 of the second oxygen content illustrated in FIG. 9.

Note that the worker may set target oxygen content for each steel product. In this case, the information processing device 10 receives the first set value and the second set value, and stores the set values in the auxiliary storage unit 14 in association with the steel product. In this way, the oxygen content can be controlled according to the target steel product, and a high-quality steel product can be manufactured.

The information processing device 10 retrieves a slag collection time from the slag DB 141, and reads a slag image, oxygen content information, and a process number. As illustrated in FIG. 9, the information processing device 10 shows the comparative display of a slag image and each oxygen content corresponding to a slag collection time for each process number. Specifically, the information processing device 10 displays the slag image and the first oxygen content corresponding to a process (process 2-1) before the vacuum treatment in a first region 100, and displays the slag image and the second oxygen content corresponding to a process (process 2-3) after the vacuum treatment in a second region 200. Furthermore, the information processing device 10 superimposes and displays the slag collection time on each slag image. The worker checks display content displayed on the display unit 15 and determines whether or not to proceed to a next process.

For example, as illustrated in FIG. 9, the first slag image, the first oxygen content (50 ppm), and the first set value (55 ppm) are displayed in the first region 100. The learning model 142 outputs the first oxygen content when the first slag image is input. The information processing device 10 acquires the first oxygen content, and compares the first oxygen content with the first set value stored in the auxiliary storage unit 14. The information processing device 10 determines that the vacuum treatment can be performed when the first oxygen content is equal to or less than the first set value.

At this time, although not illustrated, the information processing device 10 displays a predetermined pop-up screen on the display unit 15. In order to report that the oxygen content in the molten steel is equal to or less than a predetermined value, this pop-up screen displays a message such as "You can proceed to vacuum treatment since oxygen content is equal to or less than a predetermined value.". The worker confirms this message, and proceeds to the vacuum treatment. Note that, in addition to notification by the pop-up screen, the worker may be notified by voice alert.

For example, as illustrated in FIG. 9, the second slag image, the second oxygen content (30 ppm), and the second set value (20 ppm) are displayed in the second region 200. The learning model 142 outputs the second oxygen content when the second slag image is input. The information processing device 10 acquires the second oxygen content, and compares the second oxygen content with the second set value stored in the auxiliary storage unit 14. The information processing device 10 determines that the process should not proceed to the casting process when the second oxygen content is greater than the second set value.

At this time, although not illustrated, the information processing device 10 displays a predetermined pop-up screen on the display unit 15. In order to report that the oxygen content in the molten steel is not less than or equal to a predetermined value, this pop-up screen displays a message such as "You cannot proceed to casting process since oxygen content is not less than or equal to a predetermined value.". The worker confirms this message, and performs the vacuum treatment again.

As described above, the information processing device 10 can manage the steelmaking process with excellent reproducibility by comparing the first oxygen content and the second oxygen content before and after the vacuum treatment with each set value.

Note that, in addition to two-stage output such as "whether or not less than or equal to the predetermined value", the oxygen content information may be output at multiple stages based on output of the learning model 142, such as an appropriate level, an acceptable level, and an unacceptable level as an oxygen content level.

In addition, the information processing device 10 may plot each of the first oxygen content and the second oxygen content on a graph, and display the oxygen content as a polygonal line graph in which a vertical axis represents oxygen content and a horizontal axis represents time. In this way, the worker can visually detect the change in the oxygen content in the molten steel over time.

Note that the oxygen content information displayed by the information processing device 10 is not limited to an estimated value of the oxygen content in the molten steel, and an image region referred to as a feature portion when the learning model 142 estimates the oxygen content may be displayed. In this case, the feature portion is illustrated as a heat map on each of slag images of the first region 100 and the second region 200 using known Grad-CAM technique. In this way, the worker can detect the grounds for the oxygen content estimated by the learning model 142, and appropriately carry out quality control of a steel product.

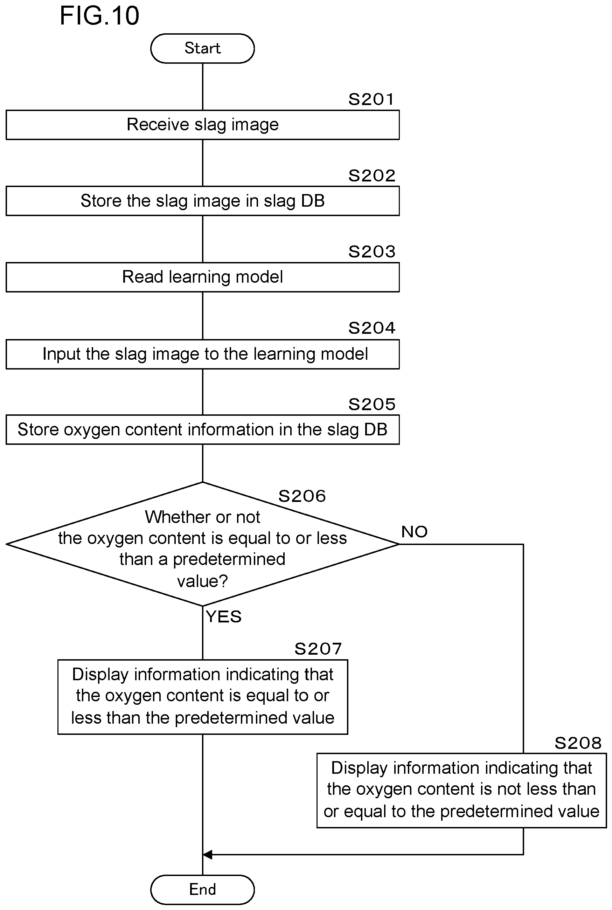

FIG. 10 is a flowchart illustrating a procedure of processing the program 140 executed by the information processing device 10. The controller 11 of the information processing device 10 executes the following processing based on the program 140.

The imaging device 20 captures slag to acquire a slag image. The imaging device 20 transmits the slag image to the information processing device 10. The controller 11 receives the slag image via the communication unit 13 (step S201). The controller 11 stores the slag image in association with a slag ID of the slag DB 141 (step S202). The controller 11 reads the learning model 142 from the auxiliary storage unit 14 (step S203).

The controller 11 inputs the slag image of the slag DB 141 to the learning model 142 (step S204). The controller 11 stores oxygen content information output by the learning model 142 in association with the slag ID of the slag DB 141 (step S205).

The controller 11 determines whether or not the oxygen content in the molten steel is equal to or less than a predetermined value based on the oxygen content information (step S206). When it is determined that the oxygen content is equal to or less than the predetermined value (step S206: YES), the controller 11 displays information indicating that the oxygen content is equal to or less than the predetermined value on the display unit 15 (step S207). On the other hand, when it is determined that the oxygen content is not less than or equal to the predetermined value (step S206: NO), the controller 11 displays information indicating that the oxygen content is not less than or equal to the predetermined value on the display unit 15 (step S208). The controller 11 ends a series of processing.

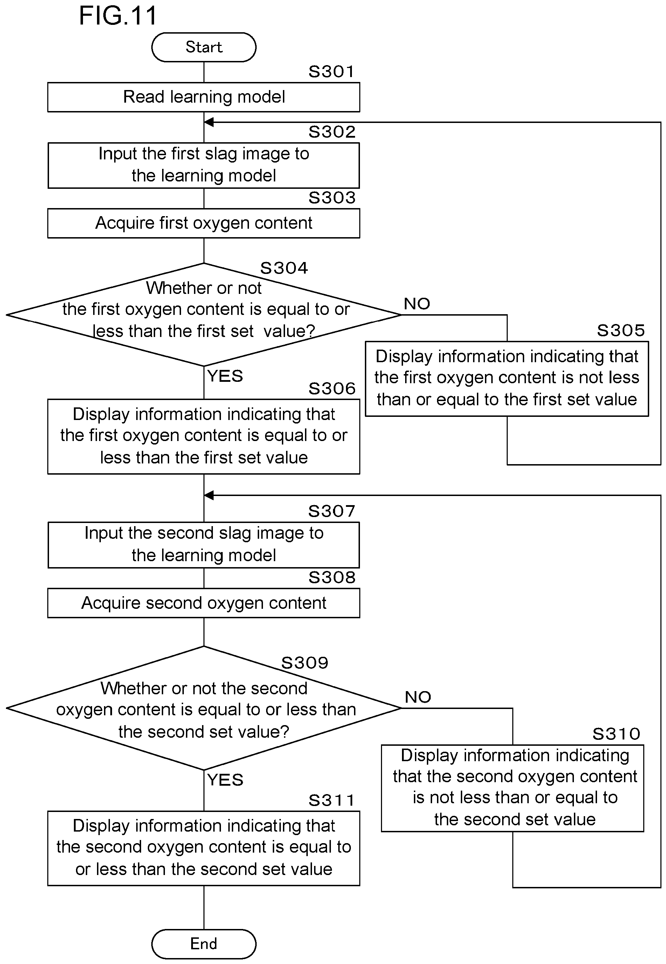

FIG. 11 is a flowchart illustrating a procedure of processing the program 140 executed by the information processing device 10. The controller 11 of the information processing device 10 executes the following processing based on the program 140.

The worker samples first slag floating on molten steel at the first time point. The imaging device 20 captures the first slag to acquire a first slag image, and transmits the first slag image to the information processing device 10. The information processing device 10 acquires the first slag image.

The controller 11 reads the learning model 142 from the auxiliary storage unit 14 (step S301). The controller 11 inputs the first slag image to the learning model 142 (step S302). The controller 11 acquires first oxygen content output by the learning model 142 (step S303).

The controller 11 determines whether or not the first oxygen content is equal to or less than the first set value (step S304). When it is determined that the first oxygen content is not less than or equal to the first set value (step S304: NO), the controller 11 displays information indicating that the first oxygen content is not less than or equal to the first set value on the display unit 15 (step S305), and returns to processing of step S302. On the other hand, when it is determined that the first oxygen content is equal to or less than the first set value (step S304: YES), the controller 11 displays information indicating that the first oxygen content is equal to or less than the first set value on the display unit 15 (step S306).

After the vacuum treatment, the worker samples second slag floating on the molten steel at the second time point. The imaging device 20 captures the second slag to acquire a second slag image. The controller 11 inputs the second slag image to the learning model 142 (step S307). The controller 11 acquires second oxygen content output by the learning model 142 (step S308).

The controller 11 determines whether or not the second oxygen content is equal to or less than the second set value (step S309). When it is determined that the second oxygen content is not less than or equal to the second set value (step S309: NO), the controller 11 displays information indicating that the second oxygen content is not less than or equal to the second set value on the display unit 15 (step S310), and returns to process of step S307. On the other hand, when it is determined that the second oxygen content is equal to or less than the second set value (step S309: YES), the controller 11 displays information indicating that the second oxygen content is equal to or less than the second set value on the display unit 15 (step S311). The controller 11 ends a series of processing.

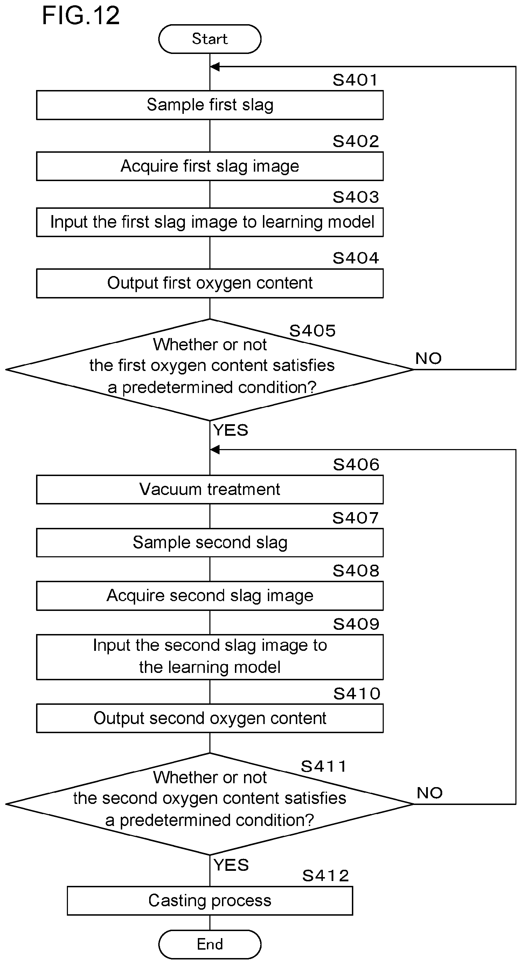

FIG. 12 is a flowchart illustrating a molten steel treatment method.

When molten steel is reduction-refined, the worker samples first slag floating on the molten steel at the first time point (step S401). The imaging device 20 acquires a first slag image by capturing the first slag (step S402). The information processing device 10 inputs the first slag image to the learning model 142 (step S403). The learning model 142 outputs first oxygen content at the first time point (step S404).

The worker determines whether or not the first oxygen content satisfies a predetermined condition (step S405). When the first oxygen content satisfies the predetermined condition (step S405: YES), the worker proceeds to vacuum treatment (step S406). On the other hand, when the first oxygen content does not satisfy the predetermined condition (step S405: NO), the worker returns to processing of step S401 without proceeding to the vacuum treatment.

After the vacuum treatment, the worker samples second slag floating on the molten steel at the second time point (step S407). The imaging device 20 acquires a second slag image by capturing the second slag (step S408). The information processing device 10 inputs the second slag image to the learning model 142 (step S409). The learning model 142 outputs second oxygen content at the second time point (step S410).

The information processing device 10 determines whether or not the second oxygen content satisfies a predetermined condition (step S411). When the second oxygen content does not satisfy the predetermined condition (step S411: NO), the worker returns to processing of step S406 without proceeding to the casting process. On the other hand, when the second oxygen content satisfies the predetermined condition (step S411: YES), the worker proceeds to the casting process (step S412). The molten steel treatment method ends a series of processing.

Note that the oxygen content as the predetermined condition in step S406 may be different from the oxygen content as the predetermined condition in step S412.

As described above, according to the present embodiment, the information processing device 10 can support work related to molten steel treatment of the worker by outputting oxygen content information obtained by inputting a slag image to the learning model 142.

It is noted that, as used herein and in the appended claims, the singular forms "a", "an", and "the" include plural referents unless the context clearly dictates otherwise.

The embodiment disclosed this time is illustrative in all respects and is not restrictive. The technical scope of the invention is defined based on the description of the claims rather than the meaning disclosed above, and includes all modifications within the meaning and scope equivalent to the claims.

The matters described in each embodiment can be combined with each other. In addition, the independent and dependent claims recited in the claims can be combined with each other in all and any combinations regardless of the form of reference. Furthermore, even though the scope of claims uses a format in which claims referencing two or more other claims (multi-claim format), the format is not limited thereto. The claims may be described using a format for describing multiple claims that refer to at least one multiple claim (multi-multiclaim).

## Claims

1. A program (140) for causing a computer (10) to execute processes of
acquiring image data of slag floating on molten steel; and
outputting oxygen content information by inputting acquired image data to a learning model (142) configured to output oxygen content information related to oxygen content in molten steel when image data of slag is input.

2. The program (140) according to claim 1, wherein:
the image data is in an HSV format;
the image data in the HSV format is acquired; and
the acquired image data in the HSV format is input to the learning model (142).

3. The program (140) according to claim 1 or 2, wherein the learning model (142) outputs the oxygen content in the molten steel.

4. The program (140) according to claim 3, wherein whether or not the oxygen content is equal to or less than a predetermined value is determined.

5. The program (140) according to claim 1, wherein:
the oxygen content information includes first oxygen content in the molten steel at a first time point and second oxygen content in the molten steel at a second time point;
whether or not the first oxygen content is equal to or less than a first set value is determined; and
whether or not the second oxygen content is equal to or less than a second set value is determined.

6. An information processing device (10) comprising a controller (11), wherein the controller (11) acquires image data of slag floating on molten steel, and outputs oxygen content information by inputting acquired image data to a learning model (142) trained to output oxygen content information related to oxygen content in molten steel when image data of slag is input.

7. An information processing method comprising, a computer (10) acquiring image data of slag floating on molten steel, and outputting oxygen content information by inputting acquired image data to a learning model (142) configured to output oxygen content information related to oxygen content in molten steel when image data of slag is input.

8. A method of generating a learning model (142), the method comprising:
acquiring training data in which image data of slag floating on molten steel and oxygen content information related to oxygen content in the molten steel are associated with each other; and
generating, based on the training data, a learning model (142) configured to output oxygen content information related to oxygen content in molten steel when image data of slag is input.

9. A molten steel treatment method comprising:
sampling first slag floating on molten steel at a first time point when the molten steel is reduction-refined;
acquiring first image data of sampled first slag;
inputting the first image data to a learning model (142) configured to output oxygen content information related to oxygen content in molten steel when image data of slag is input;
proceeding to a vacuum treatment to decompress the atmosphere when oxygen content information related to oxygen content of the first slag output from the learning model (142) satisfies a predetermined condition;
sampling second slag floating on the molten steel at a second time point after the vacuum treatment;
acquiring second image data of sampled second slag;
inputting the second image data to the learning model (142); and
proceeding to a casting process when oxygen content information related to oxygen content of the second slag output from the learning model (142) satisfies a predetermined condition.
